(19) Europäisches Patentamt
European Patent Office
Office européen des brevets

(11) Veröffentlichungsnummer: **0 030 656**
**B1**

(12) # EUROPÄISCHE PATENTSCHRIFT

(45) Veröffentlichungstag der Patentschrift: **09.02.83**

(51) Int. Cl.³: **C 09 B 43/28**, C 09 B 43/12 // C09B31/02, D06P3/52, D06P3/60

(21) Anmeldenummer: **80107340.4**

(22) Anmeldetag: **25.11.80**

(54) **Disazofarbstoffe und ihre Verwendung zum Färben von Polyestern und Cellulosefasern.**

(30) Priorität: **01.12.79 DE 2948456**

(43) Veröffentlichungstag der Anmeldung: **24.06.81 Patentblatt 81/25**

(45) Bekanntmachung des Hinweises auf die Patenterteilung: **09.02.83 Patentblatt 83/6**

(84) Benannte Vertragsstaaten: **CH DE FR GB IT LI**

(56) Entgegenhaltungen:
**FR-A-1 461 862**
**GB-A-1 387 811**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Dehnert, Johannes, Dr., Ottweilerstrasse 2, D-6700 Ludwigshafen (DE)**
Erfinder: **Juenemann, Werner, Dr., Haidfeldweg 1 C, D-6702 Bad Duerkheim 1 (DE)**

EP 0 030 656 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Disazofarbstoffe und ihre Verwendung zum Färben von Polyestern und Cellulosefasern

Die Erfindung betrifft Farbstoffe der allgemeinen Formel I

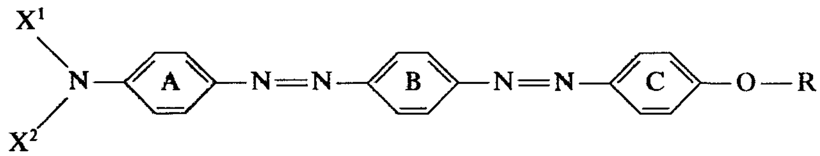

(I)

in der

R einen araliphatischen oder aromatischen Rest,

$X^1$ $-CO-R^1$, $-CO-NHR^1$, $-COOR^1$ oder

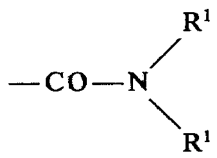

und

$X^2$ Wasserstoff, Phenyl oder einen aliphatischen oder araliphatischen Rest bedeuten, wobei

$R^1$ Wasserstoff oder ein aliphatischer, cycloaliphatischer, araliphatischer oder aromatischer Rest ist, die Ringe A, B und C noch substituiert sein und die Ringe B und C einen annellierten Benzring tragen können und wobei die Gruppe

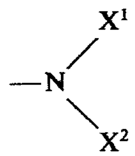

ein heterocyclischer Rest der Formel

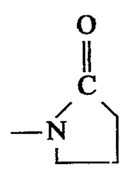

sein kann.

Reste $R^1$ sind neben Wasserstoff beispielsweise Alkenyl, $C_1$- bis $C_{12}$-Alkyl, das noch durch Sauerstoff unterbrochen und durch Hydroxy, Chlor, Brom, gegebenenfalls substituiertes Carbamoyl, Cyan, $C_1$- bis $C_8$-Alkoxy, $C_1$- bis $C_8$-Alkanoyloxy oder gegebenenfalls substituiertes Phenyl substituiert sein kann, Cycloalkyl mit 5 bis 8 C-Atomen oder gegebenenfalls durch Methyl, Äthyl oder Chlor substituiertes Phenyl.

Im einzelnen seien für $R^1$ z. B. genannt:

Wasserstoff, $-CH_3$ $-C_2H_5$ $n\text{-}C_3H_7$ $n\text{-}C_4H_9$ $n\text{-}C_6H_{13}$

$-CH_2-CH(C_2H_5)C_4H_9\text{-}n$ $n\text{-}C_8H_{17}$ $n\text{-}C_{10}H_{21}$ $n\text{-}C_{12}H_{25}$

$-C_2H_4OCH_2CH(C_2H_5)C_4H_9\text{-}n$ $-CH_2CH{=}CH_2$ $-C_2H_4Cl$ $-C_2H_4Br$

$-C_2H_4OCH_3$ $-C_2H_4OC_2H_5$ $-C_2H_4OC_6H_5$ $-C_6H_{11}$ $-C_6H_5$

$-C_6H_4CH_3$ $-C_6H_4Cl$ $-C_6H_4C_2H_5$ $-CH_2-C_6H_5$

$-CH_2-C_6H_4-CH_3$ $-CH_2C_6H_4Cl$ $-CH_2C_6H_3Cl_2$ $-CH_2C_6H_4NO_2$

$-CH_2-C_6H_4CN$ $-C_2H_4C_6H_5$ $-C_3H_6C_6H_5$ $-C_2H_4OC_6H_5$

$-C_3H_6-CN$  $-CH_2-CONH_2$  $-CH_2CON(CH_3)_2$  $-CH_2CON(C_2H_5)_2$

$-CH_2CONHC_6H_5$  $-CH_2CO_2CH_3$  $-CH_2CO_2C_2H_5$  $-CH_2CO_2C_4H_9$

$-CH_2-CO-CH_3$  $-CH_2COC_6H_5$  $-CH_2-CH(OH)C_6H_5$

$-CH_2-CH(OH)CH_2OC_6H_5$  $-CH_2CH(OH)C_2H_5$  $-C_2H_4OCOCH_3$

$-C_2H_4OCOC_3H_7$  $-CH_2CH(C_2H_5)OCOCH_3$  $CH_2CH(C_2H_5)OCOC_2H_5$

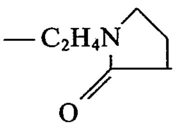 oder $-C_2H_4OC_2H_4OC_6H_5$

Der Ring B kann zum Beispiel durch Chlor, Brom, Methyl, Äthyl, Acetylamino, $C_1$- bis $C_4$-Alkoxy oder Phenoxy substituiert sein oder einen anellierten Benzring, der gegebenenfalls durch Methoxy oder Äthoxy substituiert ist, tragen.

Für den Ring C kommen als Substituenten Chlor, Methyl, Äthyl, Methoxy, Äthoxy, Phenyl oder Acetylamino in Betracht.

Substituenten für den Ring A sind beispielsweise Chlor, Methyl und $C_1-C_4$-Alkoxy.

Araliphatische Reste R sind z. B.:

$-CH_2-C_6H_5$  $-CH_2-C_6H_4-Cl$  $-CH_2-C_6H_3Cl_2$

$-CH_2-C_6H_4NO_2$  $-CH_2-C_6H_4-CN$  $-C_2H_4-C_6H_5$

$-C_3H_6-C_6H_5$  $-C_2H_4-O-C_6H_5$  $-C_2H_4OC_2H_4OC_6H_5$

$-CH_2-CO-C_6H_5$  $-CH_2-CH(CH_3)-C_6H_5$ oder

$-CH_2-C_6H_4-CH_3$.

Aromatische Reste R sind z. B.:

Phenyl, p-Chlorphenyl.

Zur Herstellung der Verbindungen der Formel I kann man in Verbindungen der Formel II

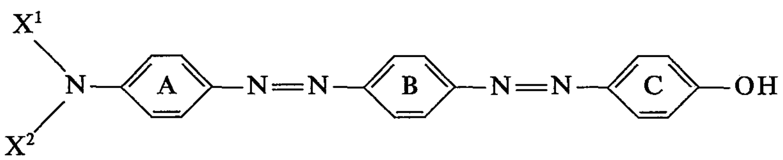

(II)

nach an sich bekannten Methoden den Rest R einführen. Zur Aralkylierung der phenolischen OH-Gruppe sind beispielsweise geeignet: gegebenenfalls substituierte Aralkylhalogenide und -bromide sowie gegebenenfalls substituierte Diaralkylsulfate.

Die Verätherung erfolgt in an sich bekannter Weise, beispielsweise im wäßrig-alkalischen Medium, im alkalischen, wäßrig-organischen Medium oder wasserfrei in organischen Lösungsmitteln unter Zusatz säurebindender Mittel. Man arbeitet am günstigsten bei Temperaturen von 50 bis 160°C, wobei gegebenenfalls bei niedrig siedenden Lösungsmitteln im Autoklaven gearbeitet wird.

Eine weitere Herstellungsweise der Farbstoffe der Formel I beruht auf der an sich bekannten Acylierung von Verbindungen der Formel III

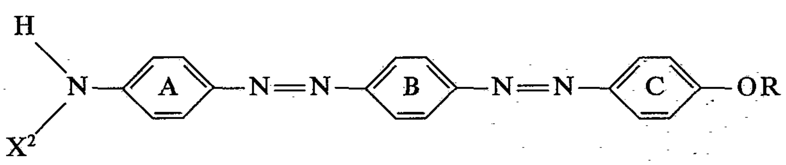

(III)

Einzelheiten der Herstellung können den Beispielen entnommen werden, in denen sich Angaben über Teile und Prozente, sofern nicht anders vermerkt, auf das Gewicht beziehen.

Als Färbeverfahren zur Applikation der Farbstoffe der Formel I eignen sich insbesondere die in der DE-C-1 811 796 und in den DE-A-2 524 243 und 2 528 743 sowie DE-C-2 855 188.4 beschriebenen

Verfahren.

Technisch besonders wertvoll sind Verbindungen der allgemeinen Formel I a

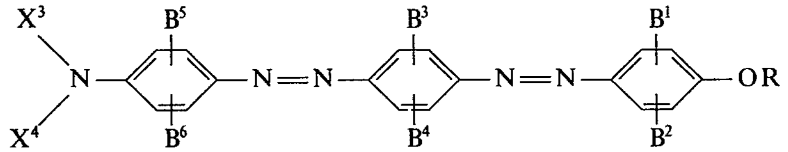

in der

| | |
|---|---|
| $B^1$ | Wasserstoff, Chlor, Methyl, Äthyl, Phenyl, Methoxy oder Äthoxy, |
| $B^2$ | Wasserstoff, Chlor oder Methyl, |
| $B^3$ | Wasserstoff, Chlor, Methyl, Äthyl, Acetylamino oder $C_1$- bis $C_4$-Alkoxy, |
| $B^4$ | Wasserstoff, Methyl oder $C_1$- bis $C_4$-Alkoxy, |
| $B^3$ und $B^4$ | zusammen einen anellierten Benzring, |
| $B^5$ | Wasserstoff, Methyl, Chlor oder $C_1$- bis $C_4$-Alkoxy, |
| $B^6$ | Wasserstoff, Methyl oder $C_1$- bis $C_4$-Alkoxy, |
| $X^3$ | $C_1$- bis $C_8$-Alkanoyl oder Benzoyl, |
| $X_4$ | Wasserstoff, $C_1$- bis $C_4$-Alkyl oder Phenyl und |
| $X^3$ und $X^4$ | zusammen einen Rest der Formel |

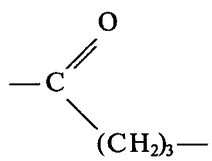

bedeuten und

R die angegebene Bedeutung hat.

Bevorzugte Reste $X^3$ sind z. B.:

$-COH$, $-COCH_3$, $-COC_2H_5$, $-COC_3H_7$, $-CO_2CH_3$, $-CO_2C_2H_5$ oder $-CON(CH_3)_2$.

Bevorzugte Reste R sind beispielsweise:

$-CH_2-C_6H_5$, $-CH_2-C_6H_4Cl$, $-C_2H_4-C_6H_5$, $-C_2H_4O-C_6H_5$,
$-C_2H_4OC_2H_4OC_6H_5$, $-C_6H_5$ oder $C_6H_4Cl$.

Die bei den folgenden Beispielen angegebenen $\lambda_{max}$-Werte wurden in Dimethylformamid gemessen und sind in nm angegeben.

## Beispiel 1

33 Teile des Farbstoffes der Formel

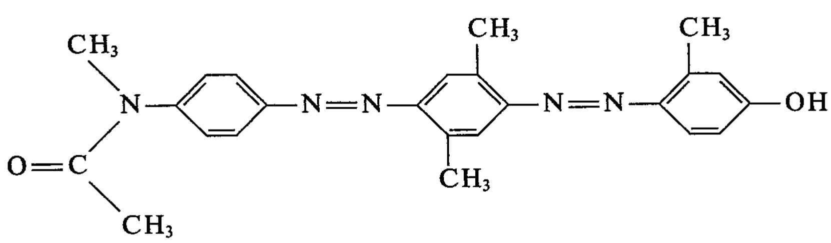

werden zusammen mit 42 Teilen Kaliumkarbonat, 51 Raumteilen 2-Phenyläthylbromid und 0,4 Teilen Kaliumjodid in 225 Raumteilen N-Methylpyrrolidon 6 Stunden bei 120°C gerührt. Bei Raumtemperatur wird der Ansatz in 600 Teile Methanol gegossen und mit 1000 Teilen Wasser gefällt. Nach dem Absaugen, Waschen mit Wasser und Trocknen erhält man 38 Teile des Farbstoffs der Formel

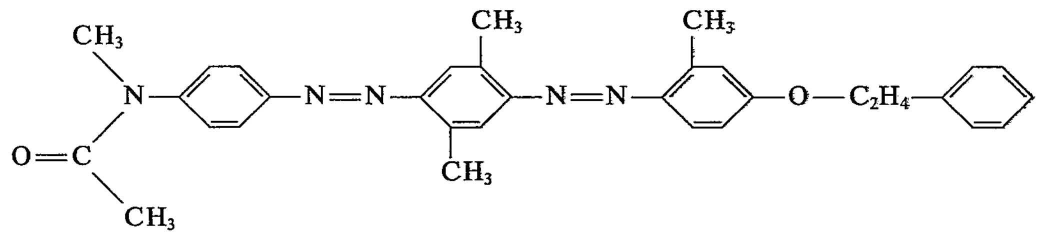

10 Teile dieses Farbstoffs werden mit 100 Teilen Polyäthylenoxid vom Molekulargewicht 300 und 790 Teilen einer 3prozentigen Alginatverdickung zu einer Farbe vermischt, mit der ein Mischgewebe aus Polyester/Baumwolle (Gewichtsverhältnis 65 : 35) im Rotationsfilmdruck bedruckt und anschließend bei 100°C getrocknet wird. Danach behandelt man 2 Minuten bei 200°C mit Heißdampf, spült den Druck kalt, seift ihn kochend, spült wiederum kalt und trocknet. Man erhält einen licht-, wasch-, lösungsmittel- und sublimationsechten gelbstichigen Orangedruck auf weißem Grund. Ein gleiches Ergebnis resultiert beim Druck auf reinem Baumwollgewebe.
$\lambda_{max}$: 402.

Beispiel 2

In 150 Teilen N-Methylpyrrolidon werden 22,8 Teile des Farbstoffes der Formel

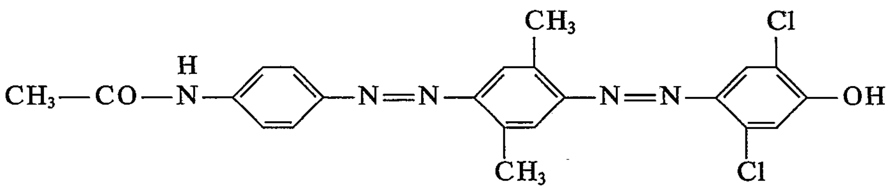

20,9 Teile Kaliumkarbonat und 25 Teile Benzylchlorid 4 Stunden bei 110°C gerührt. Dann werden dem Ansatz bei Raumtemperatur 600 Teile Methanol zugefügt, der Niederschlag abgesaugt, mit Methanol und Wasser gewaschen und getrocknet. Es verbleiben 17 Teile des Farbstoffs der Formel

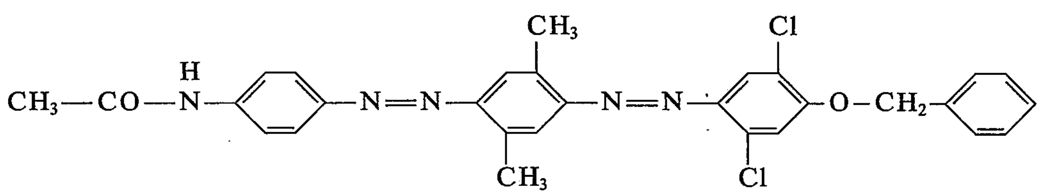

Ein Gewebe aus 65 Teilen Polyester-Faser und 35 Teilen mercerisierter Baumwolle wird mit einer Flotte imprägniert, die 10 g/l einer 20%igen flüssigen Zubereitung des obigen Dispersionsfarbstoffes und 80 g/l eines Quell- und Farbstofflösungsmittels aus einer Mischung aus 3 Teilen Polyäthylenglykol mit einem Molekulargewicht von 1500 und 1 Teil eines Umsetzungsprodukts aus 1 Mol Neopentandiamin und 15,6 Mol Äthylenoxid enthält. Der pH-Wert der Klotzflotte wird mit Glutarsäure auf 6 eingestellt. Das Gewebe wird mit der Klotzflotte imprägniert, wobei die Flottenaufnahme 45% beträgt. Das Gewebe wird dann 60 Sekunden bei einer Temperatur von 120°C getrocknet und 90 Sekunden bei 225°C in einem kontinuierlich arbeitenden Labortrockner fixiert. Danach wird es kalt und warm gespült und 5 Minuten bei 100°C in Gegenwart eines handelsüblichen Waschmittels gewaschen. Der Farbstoff ist fast vollständig auf dem Gewebe fixiert. Man erhält eine goldgelbe Färbung mit guten Licht-, Wasch- und Reibechtheiten.
$\lambda_{max}$: 410.

Beispiel 3

25 Teile des Farbstoffs der Formel

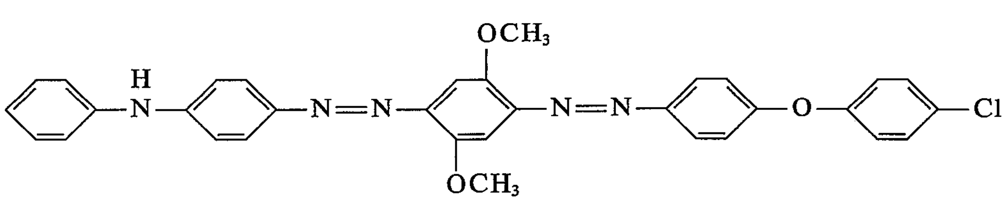

werden in 100 Raumteilen Propionsäureanhydrid in Gegenwart von 2 Teilen 4-Dimethylaminopyridin bei 110 bis 120°C so lange gerührt, bis dünnschichtchromatographisch kein Ausgangsprodukt mehr nachzuweisen ist. Bei Raumtemperatur wird abgesaugt, mit Methanol gewaschen und im Vakuum bei 60° C getrocknet. Man erhält 15,5 Teile des Farbstoffs der Formel

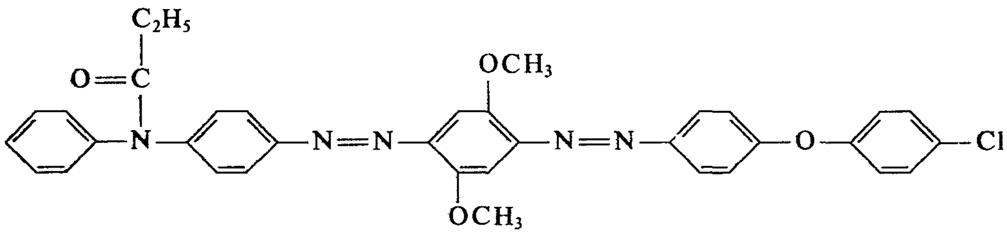

Nach dem im voranstehenden Beispiel angegebenen Färbeverfahren fixiert dieser Farbstoff nahezu vollständig auf dem Gewebe. Die Färbung ist rotorange und weist gute Licht- und Waschechtheiten auf.

$\lambda_{max}$: 380.

Auf analoge Weise werden die folgenden Farbstoffe erhalten, die sich nach den angegebenen Methoden auf Baumwolle und Mischgewebe färben und drucken lassen und Färbungen mit guten Echtheiten ergeben.

Die in den folgenden Beispielen genannten Farbstoffe lassen sich wie folgt in eine handelsfähige Farbstoffzubereitung überführen:

30 Teile Farbstoff
6 Teile Dispergiermittel
10 Teile Wasserretentionsmittel
1 Teil Desinfektionsmittel und ungefähr
53 Teile Wasser werden in einer Rührwerksmühle bis zu einer Teilchengröße von ungefähr 0,5 μ vermahlen. Man erhält so eine lagerstabile Dispersion des Farbstoffes.

Die Substituenten $X^1$ und $X^2$ sowie $T^1$ bis $T^6$ der in der folgenden Tabelle aufgeführten Farbstoffe sowie die in den Tabellenspalten vorangestellten Indexzahlen entsprechen der Formel IV

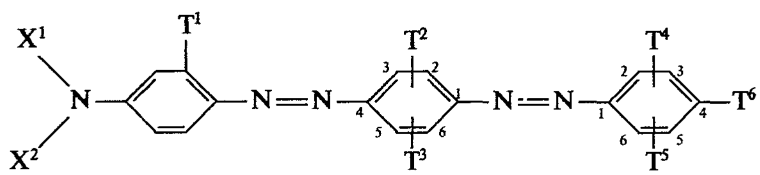

(IV)

| Bsp. | $X^1$ | $X^2$ | $T^1$ | $T^2$ | $T^3$ | $T^4$ | $T^5$ | $T^6$ | Farbton | λ max |
|---|---|---|---|---|---|---|---|---|---|---|
| 4 | $-CO-CH_3$ | $CH_3$ | H | 2-$CH_3$ | 5-$CH_3$ | 2-$CH_3$ | H | $OCH_2C_6H_5$ | goldgelb | 403 |
| 5 | $-CO-CH_3$ | $CH_3$ | H | 2-$CH_3$ | 5-$CH_3$ | 2-$CH_3$ | H | $OCH_2CH_2OC_6H_5$ | goldgelb | 403 |
| 6 | $-CO-CH_3$ | $CH_3$ | H | 2-$CH_3$ | 5-$CH_3$ | 2-$CH_3$ | H | $OC_2H_4OC_2H_4OC_6H_5$ | goldgelb | 402 |
| 7 | $-CO-CH_3$ | $CH_3$ | H | 2-$CH_3$ | 5-$CH_3$ | 2-$CH_3$ | H | $OCH_2C_6H_5$-o-Cl | goldgelb | 400 |
| 8 | $-CO-CH_3$ | $CH_3$ | H | 2-$CH_3$ | 5-$CH_3$ | H | H | $OCH_2C_6H_5$ | goldgelb | 403 |
| 9 | $-CO-CH_3$ | $CH_3$ | H | 2-$CH_3$ | 5-$CH_3$ | H | H | $OC_2H_4C_6H_5$ | goldgelb | 402 |
| 10 | $-CO-CH_3$ | $CH_3$ | H | 2-$CH_3$ | 5-$CH_3$ | H | H | $OC_2H_4OC_6H_5$ | goldgelb | 402 |
| 11 | $-CO-CH_3$ | $CH_3$ | H | 2-$CH_3$ | 5-$CH_3$ | H | H | $OCH_2C_6H_4Cl$-o | goldgelb | 402 |
| 12 | $-CO-CH_3$ | $CH_3$ | H | 2-$CH_3$ | 5-$CH_3$ | 2-$CH_3$ | H | $OCH_2C_6H_4Cl$-o | goldgelb | 403 |
| 13 | $-CO-CH_3$ | $CH_3$ | H | 2-$CH_3$ | 5-$CH_3$ | 2-$CH_3$ | H | $OCH_2C_6H_4CH_3$ | goldgelb | 402 |
| 14 | $-CO-CH_3$ | $CH_3$ | H | 2-$CH_3$ | 5-$CH_3$ | 2-$CH_3$ | H | $OCH_2C_6H_4$—Cl-p | goldgelb | 403 |
| 15 | $-CO-CH_3$ | $CH_3$ | H | 2-$CH_3$ | 5-$CH_3$ | 2-Cl | 5-Cl | $OCH_2C_6H_5$ | goldgelb | 408 |
| 16 | $-CO-CH_3$ | $CH_3$ | H | 2-$CH_3$ | 5-$CH_3$ | 2-Cl | 5-Cl | $OC_2H_4OC_6H_5$ | goldgelb | 406 |
| 17 | $-CO-CH_3$ | $CH_3$ | H | 2-$CH_3$ | 5-$CH_3$ | 3-$CH_3$ | H | $OC_2H_4OC_6H_5$ | goldgelb | 404 |
| 18 | $-CO-CH_3$ | $CH_3$ | H | 2-$OCH_3$ | 5-$CH_3$ | 2-$CH_3$ | H | $OC_2H_4OC_6H_5$ | orange | 414 |
| 19 | $-CO-CH_3$ | $CH_3$ | H | 2-$OCH_3$ | 5-$CH_3$ | 2-$CH_3$ | H | $OCH_2C_6H_5$ | orange | 414 |
| 20 | $-CO-CH_3$ | $CH_3$ | H | 2-$OCH_3$ | 5-$CH_3$ | 2-$CH_3$ | H | $OCH_2C_6H_5$ | rotorange | 485 |
| 21 | $-CO-CH_3$ | $CH_3$ | H | 2-$OCH_3$ | 5-$CH_3$ | 2-$CH_3$ | H | $OC_2H_4C_6H_5$ | rotorange | 486 |
| 22 | $-CO-CH_3$ | $CH_3$ | H | 2-$OCH_3$ | 5-$CH_3$ | 2-$CH_3$ | H | $OC_2H_4OC_6H_5$ | rotorange | 485 |
| 23 | $-CO-CH_3$ | $CH_3$ | H | 2-$OCH_3$ | 5-$CH_3$ | 2-$CH_3$ | H | $OC_2H_4OC_2H_4OC_6H_5$ | rotorange | 485 |
| 24 | $-CO-CH_3$ | H | H | 2-$CH_3$ | 5-$CH_3$ | 2-Cl | 5-Cl | $OC_2H_4C_6H_5$ | goldgelb | 411 |

Fortsetzung

| Bsp. | $X^1$ | $X^2$ | $T^1$ | $T^2$ | $T^3$ | $T^4$ | $T^5$ | $T^6$ | Farbton | λ max |
|---|---|---|---|---|---|---|---|---|---|---|
| 25 | $-CO-CH_3$ | H | H | 2-$CH_3$ | 5-$CH_3$ | 2-Cl | 5-Cl | $OC_2H_4OC_6H_5$ | goldgelb | 410 |
| 26 | $-CO-CH_3$ | H | H | 2-$CH_3$ | 5-$CH_3$ | 2-Cl | 5-Cl | $OC_2H_4OC_2H_4OC_6H_5$ | goldgelb | 411 |
| 27 | $-CO-CH_3$ | H | H | 2-$CH_3$ | 5-$CH_3$ | 2-Cl | 5-Cl | $OCH_2CH(CH_3)C_6H_5$ | goldgelb | 411 |
| 28 | $-CO-CH_3$ | H | H | 2-$OCH_3$ | 5-$CH_3$ | 2-Cl | 5-Cl | $OCH_2C_6H_5$ | goldgelb | 426 |
| 29 | $-CO-CH_3$ | H | H | 2-$OCH_3$ | 5-$CH_3$ | 2-Cl | 5-Cl | $OC_2H_4C_6H_5$ | goldgelb | 426 |
| 30 | $-CO-CH_3$ | H | H | 2-$OCH_3$ | 5-$CH_3$ | 2-Cl | 5-Cl | $OC_2H_4OC_6H_5$ | goldgelb | 425 |
| 31 | $-CO-CH_3$ | H | H | 2-$OCH_3$ | 5-$CH_3$ | 2-$CH_3$ | H | $OC_2H_4OC_6H_5$ | rotorange | 486 |
| 32 | $-CO-CH_3$ | H | H | 2-$OCH_3$ | 5-$CH_3$ | 2-$CH_3$ | H | $OC_2H_4C_6H_5$ | rotorange | 486 |
| 33 | $-CO-CH_3$ | H | H | 2-$OCH_3$ | 5-$CH_3$ | 2-$CH_3$ | H | $OCH_2C_6H_5$ | rotorange | 486 |
| 34 | $-CO-CH_3$ | H | H | 2-$OCH_3$ | 5-$CH_3$ | H | H | $OCH_2C_6H_5$ | rotorange | 484 |
| 35 | $-CO-CH_3$ | H | H | 2-$OCH_3$ | 5-$OCH_3$ | H | H | $OC_2H_4OC_6H_5$ | rotorange | 485 |
| 36 | $-CO-CH_3$ | H | H | 2-$CH_3$ | 5-$CH_3$ | 2-$CH_3$ | H | $OC_2H_4OC_6H_5$ | goldgelb | 406 |
| 37 | $-CO-CH_3$ | H | H | 2-$CH_3$ | 5-$CH_3$ | 2-$CH_3$ | H | $OCH_2C_6H_5$ | goldgelb | 406 |
| 38 | $-CO-CH_3$ | H | H | 2-$CH_3$ | 5-$CH_3$ | 2-$CH_3$ | H | $OC_2H_4C_6H_5$ | goldgelb | 405 |
| 39 | $-CO-CH_3$ | H | H | 2-$CH_3$ | 5-$CH_3$ | H | H | $OC_2H_4C_6H_5$ | goldgelb | 406 |
| 40 | $-CO-CH_3$ | H | H | 2-$CH_3$ | 5-$CH_3$ | H | H | $OCH_2C_6H_5$ | goldgelb | 403 |
| 41 | $-CO-CH_3$ | H | H | 2-$CH_3$ | 5-$CH_3$ | H | 3-$CH_3$ | $OCH_2C_6H_5$ | goldgelb | 405 |
| 42 | $-CO-CH_3$ | H | H | 2-$CH_3$ | 5-$CH_3$ | H | 3-$CH_3$ | $OC_2H_4OC_6H_5$ | goldgelb | 405 |
| 43 | $-CO-CH_3$ | H | H | 2-$CH_3$ | 5-$CH_3$ | H | 3-$CH_3$ | $OC_2H_4C_6H_5$ | goldgelb | 405 |
| 44 | $-CO-CH_3$ | H | H | 2-$OCH_3$ | 5-$CH_3$ | H | 3-$CH_3$ | $OC_2H_4C_6H_5$ | orange | 425 |

Fortsetzung

| Bsp. | $X^1$ | $X^2$ | $T^1$ | $T^2$ | $T^3$ | $T^4$ | $T^5$ | $T^6$ | Farbton | λ max |
|---|---|---|---|---|---|---|---|---|---|---|
| 45 | $-CO-CH_3$ | H | H | 2-$OCH_3$ | 5-$CH_3$ | 2-$CH_3$ | H | $OC_2H_4C_6H_5$ | orange | 426 |
| 46 | $-CO-CH_3$ | H | H | 2-$CH_3$ | 5-$OCH_3$ | 2-$CH_3$ | H | $OCH_2C_6H_5$ | orange | 425 |
| 47 | $-CO-CH_3$ | H | H | 2-$CH_3$ | 5-$OCH_3$ | 2-$CH_3$ | H | $OC_2H_4OC_6H_5$ | orange | 426 |
| 48 | $-CO-CH_3$ | H | H | 3-$CH_3$ | H | 2-$CH_3$ | H | $OC_2H_4OC_6H_5$ | goldgelb | 404 |
| 49 | $-CO-CH_3$ | H | H | 3-$CH_3$ | H | H | H | $OC_2H_4OC_6H_5$ | goldgelb | 403 |
| 50 | $-CO-CH_3$ | H | H | 3-$CH_3$ | H | H | H | $OC_2H_4C_6H_5$ | goldgelb | 403 |
| 51 | $-CO-CH_3$ | H | H | 3-$CH_3$ | H | H | H | $OCH_2C_6H_5$ | goldgelb | 403 |
| 52 | $-CO-CH_3$ | H | H | 3-$OCH_3$ | H | H | H | $OCH_2C_6H_5$ | orange | 415 |
| 53 | $-CO-CH_3$ | H | H | 2-$OCH_3$ | H | 2-Cl | 5-Cl | $OCH_2C_6H_5$ | orange | 430 |
| 54 | $-CO-CH_3$ | H | H | 2-$OCH_3$ | H | 2-Cl | 5-Cl | $OC_2H_4C_6H_5$ | orange | 429 |
| 55 | $-CO-CH_3$ | H | H | 2-$OCH_3$ | 5-$CH_3$ | 3-$C_6H_5$ | H | $OC_2H_4C_6H_5$ | goldgelb | 409 |
| 56 | $-CO-CH_3$ | H | H | 2-$OCH_3$ | 5-$CH_3$ | 3-$C_6H_5$ | H | $OCH_2C_6H_5$ | goldgelb | 409 |
| 57 | $-CO-CH_3$ | H | H | 2-$CH_3$ | 5-$CH_3$ | 3-$C_6H_5$ | H | $OC_2H_4OC_6H_5$ | goldgelb | 408 |
| 58 | $-CO-CH_3$ | $CH_3$ | H | 2-$CH_3$ | 5-$CH_3$ | 3-$C_6H_5$ | H | $OCH_2C_6H_5-Cl$-(o) | goldgelb | 406 |
| 59 | $-CO-CH_3$ | $CH_3$ | H | 2-$CH_3$ | 5-$CH_3$ | 3-$C_6H_5$ | H | $OCH_2C_6H_5$ | goldgelb | 406 |
| 60 | $-CO-C_2H_5$ | H | H | 2-$CH_3$ | 5-$CH_3$ | 2-$CH_3$ | H | $OCH_2C_6H_5$ | goldgelb | 403 |
| 61 | $-CO-CH_3$ | H | H | 2-$OCH_3$ | 5-$NHCOCH_3$ | H | H | $OCH_2C_6H_5$ | rotorange | 484 |
| 62 | $-CO-CH_3$ | H | H | 2-$OCH_3$ | 5-$NHCOCH_3$ | H | H | $OC_2H_4C_6H_5$ | rotorange | 484 |
| 63 | $-CO-CH_3$ | $C_4H_9$-n | H | 2-$CH_3$ | 5-$CH_3$ | H | H | $OC_6H_5$ | goldgelb | 402 |
| 64 | $-CO-CH_3$ | $CH_3$ | H | 2-$OCH_3$ | 5-$NHCOCH_3$ | 2-$CH_3$ | H | $OC_2H_4C_6H_5$ | rotorange | 480 |

Fortsetzung

| Bsp. | $X^1$ | $X^2$ | $T^1$ | $T^2$ | $T^3$ | $T^4$ | $T^5$ | $T^6$ | Farbton | λ max |
|---|---|---|---|---|---|---|---|---|---|---|
| 65 | $-CO-CH_3$ | $CH_3$ | H | 2-$OC_2H_5$ | 5-$OC_2H_5$ | 2-$CH_3$ | H | $OC_2H_4C_6H_5$ | rotorange | 485 |
| 66 | $-CO-CH_3$ | H | H | 2-$OC_2H_5$ | 5-$OC_2H_5$ | 2-$CH_3$ | H | $OC_2H_4C_6H_5$ | rotorange | 485 |
| 67 | $-CO-CH_3$ | H | H | 2-$OC_4H_9$ | 5-$OC_4H_9$ | H | H | $OCH_2C_6H_5$ | rotorange | 484 |
| 68 | $-CO-CH_3$ | H | Cl | 2-$CH_3$ | 5-$CH_3$ | H | H | $OCH_2C_6H_5$ | goldgelb | 403 |
| 69 | $-CO-CH_3$ | H | Cl | 2-$CH_3$ | 5-$CH_3$ | H | H | $OC_2H_4C_6H_5$ | goldgelb | 403 |
| 70 | $-CO-CH_3$ | H | Cl | 2-$CH_3$ | 5-$CH_3$ | H | H | $OC_2H_4OC_6H_5$ | goldgelb | 403 |
| 71 | $-CO-CH_3$ | H | $OCH_3$ | 2-$CH_3$ | 5-$CH_3$ | H | H | $OC_2H_4OC_6H_5$ | goldgelb | 406 |
| 72 | $-CO-CH_3$ | H | $OCH_3$ | 2-$CH_3$ | 5-$CH_3$ | H | H | $OCH_2C_6H_5$ | goldgelb | 406 |
| 73 | $-CO-CH_3$ | H | $OCH_3$ | 2-$CH_3$ | 5-$CH_3$ | H | H | $OC_2H_4C_6H_5$ | goldgelb | 406 |
| 74 | $-CO-CH_3$ | H | $OCH_3$ | 2-$OCH_3$ | 5-$CH_3$ | 2-$CH_3$ | H | $OC_2H_4C_6H_5$ | orange | 421 |
| 75 | $-CO-CH_3$ | H | $OCH_3$ | 2-$OCH_3$ | 5-$CH_3$ | 2-$CH_3$ | H | $OC_2H_4C_6H_5$ | rotorange | 488 |
| 76 | $-CO-CH_3$ | H | $OCH_3$ | 2-$OCH_3$ | 5-$CH_3$ | 2-$CH_3$ | H | $OCH_2C_6H_5$ | rotorange | 488 |
| 77 | $-CO-CH_3$ | H | $OCH_3$ | 2-$OCH_3$ | 5-$CH_3$ | 2-$CH_3$ | H | $OC_2H_4OC_6H_5$ | rotorange | 488 |
| 78 | $-CO-CH_3$ | H | $CH_3$ | 2-$OCH_3$ | 5-$CH_3$ | 2-$CH_3$ | H | $OC_2H_4OC_6H_5$ | rotorange | 486 |
| 79 | $-CO-CH_3$ | H | $CH_3$ | 2-$OCH_3$ | 5-$OCH_3$ | 2-$CH_3$ | H | $OCH_2C_6H_5$ | rotorange | 486 |
| 80 | $-CO-CH_3$ | H | $CH_3$ | 2-$CH_3$ | 5-$CH_3$ | 2-$CH_3$ | H | $OCH_2C_6H_5$ | goldgelb | 403 |
| 81 | $-CO-CH_3$ | H | $CH_3$ | 2-$CH_3$ | 5-$CH_3$ | 2-$CH_3$ | H | $OC_2H_4OC_6H_5$ | goldgelb | 402 |
| 82 | $-COC_3H_6$-n | H | H | 2-$CH_3$ | 5-$CH_3$ | H | H | $OC_2H_4OC_6H_5$ | goldgelb | 403 |
| 83 | $-COC_4H_9$-n | H | H | 2-$CH_3$ | 5-$CH_3$ | H | H | $OC_2H_4OC_6H_5$ | goldgelb | 403 |
| 84 | $-CO_2CH_3$ | H | H | 3-$CH_3$ | H | H | H | $OC_2H_4OC_6H_5$ | goldgelb | 403 |

Fortsetzung

| Bsp. | $X^1$ | $X^2$ | $T^1$ | $T^2$ | $T^3$ | $T^4$ | $T^5$ | $T^6$ | Farbton | λ max |
|---|---|---|---|---|---|---|---|---|---|---|
| 85 | $-CO_2CH_3$ | H | H | 3-$CH_3$ | H | H | H | $OCH_2C_6H_5$ | goldgelb | 402 |
| 86 | $-CONH-CH_3$ | H | H | 2-$CH_3$ | 5-$CH_3$ | 2-$CH_3$ | H | $OCH_2C_6H_5$ | goldgelb | 404 |
| 87 | $-CO-CH_3$ | H | H | 2-$CH_3$ | 5-$CH_3$ | 2-Cl | 5-Cl | $OCH_2COC_6H_5$ | goldgelb | 410 |
| 90 | $-CO-CH_3$ | H | H | 2-$CH_3$ | 5-$CH_3$ | 2-Cl | 5-Cl | $OCH_2C_6H_4CH_3$ | goldgelb | 410 |
| 91 | $-CO-CH_3$ | $CH_3$ | H | 2-$CH_3$ | 5-$CH_3$ | 3-$CH_3$ | H | $OC_2H_4C_6H_5$ | goldgelb | 402 |
| 92 | $-CO-C_6H_5$ | H | H | 2-$CH_3$ | 5-$CH_3$ | H | H | $OC_2H_4C_6H_5$ | goldgelb | 405 |
| 93 | $-CO-CH_3$ | H | H | 2-$OCH_3$ | 5-$CH_3$ | 2-$CH_3$ | H | $OC_2H_4C_6H_5$ | goldgelb | 426 |
| 94 | $-CO-CH_3$ | H | H | 2-$OCH_3$ | 5-$CH_3$ | 2-$CH_3$ | H | $OCH_2C_6H_5$ | goldgelb | 427 |
| 95 | $-CO-CH_3$ | H | H | 2-$OCH_3$ | 5-$CH_3$ | 2-$CH_3$ | H | $OC_2H_4OC_6H_5$ | goldgelb | 427 |
| 96 | $-CO-CH_3$ | $CH_3$ | H | 2-$OCH_3$ | 5-$CH_3$ | 2-$CH_3$ | H | $OC_2H_4OC_6H_5$ | goldgelb | 414 |
| 97 | $-CO-CH_3$ | $CH_3$ | H | 2-$OCH_3$ | 5-$CH_3$ | 2-$CH_3$ | H | $OCH_2C_6H_5$ | goldgelb | 415 |
| 98 | $-CO-CH_3$ | $CH_3$ | H | 2-$OCH_3$ | 5-$CH_3$ | 2-$CH_3$ | H | $OC_2H_4C_6H_5$ | goldgelb | 418 |
| 99 | $-CO-H$ | H | H | 2-$CH_3$ | 5-$CH_3$ | 2-Cl | 5-Cl | $OCH_2C_6H_5$ | goldgelb | 410 |
| 100 | $-CO-H$ | $CH_3$ | H | 2-$CH_3$ | 5-$CH_3$ | 2-Cl | 5-Cl | $OC_2H_4C_6H_5$ | goldgelb | 404 |
| 101 | $-CO-CH_3$ | $C_6H_5$ | H | 2-$OCH_3$ | 5-$OCH_3$ | H | H | $OC_2H_4C_6H_5$ | orange | |
| 102 | $COCH(C_2H_5)C_4H_9$-n | $C_2H_5$ | $CH_3$ | 2-$OCH_3$ | 5-$OCH_3$ | H | H | $OC_2H_4C_6H_5$ | orange | 485 |
| 103 | $COC_2H_5$ | $C_6H_5$ | H | 2-$OCH_3$ | 5-$OCH_3$ | H | H | $OC_2H_4C_6H_5$ | orange | 377 |
| 104 | $COC_2H_5$ | H | H | 2-$CH_3$ | 5-$CH_3$ | 2-Cl | 5-Cl | $OC_2H_4C_6H_5$ | goldgelb | 411 |
| 105 | $COC_2H_5$ | H | H | 2-$CH_3$ | 5-$CH_3$ | 2-Cl | 5-Cl | $OCH_2C_6H_5$ | goldgelb | 410 |
| 106 | $COC_2H_5$ | H | H | 2-$CH_3$ | 5-$CH_3$ | 2-Cl | 5-Cl | $OC_2H_4OC_6H_5$ | goldgelb | 411 |

Fortsetzung

| Bsp. | $X^1$ | $X^2$ | $T^1$ | $T^2$ | $T^3$ | $T^4$ | $T^5$ | $T^6$ | Farbton | λ max |
|---|---|---|---|---|---|---|---|---|---|---|
| 107 | $COC_2H_5$ | H | H | 2-$OCH_3$ | 5-$CH_3$ | 2-$CH_3$ | H | $OC_2H_4OC_6H_5$ | orange | 426 |
| 108 | $COC_2H_5$ | H | H | 2-$OCH_3$ | 5-$CH_3$ | H | H | $OCH_2C_6H_5$ | orange | 425 |
| 109 | $COC_2H_5$ | H | H | 2-$OCH_3$ | 5-$OCH_3$ | H | H | $OC_2H_4C_6H_5$ | rotorange | 486 |
| 110 | $COC_2H_5$ | H | H | 2-$OCH_3$ | 5-$OCH_3$ | H | H | $OCH_2C_6H_5$ | rotorange | 486 |
| 111 | $COC_2H_5$ | H | H | 2-$OCH_3$ | 5-$OCH_3$ | H | 5-$CH_3$ | $OCH_2C_6H_5$ | rotorange | 487 |
| 112 | $COC_2H_5$ | $CH_3$ | H | 2-$CH_3$ | 5-$CH_3$ | 2-Cl | 5-Cl | $OCH_2C_6H_5$ | goldgelb | 405 |
| 113 | $CO-C_2H_5$ | $CH_3$ | H | 2-$CH_3$ | 5-$CH_3$ | 2-Cl | 5-Cl | $OC_2H_4C_6H_5$ | goldgelb | 407 |
| 114 | $CON(CH_3)_2$ | H | H | 2-$CH_3$ | 5-$CH_3$ | 2-Cl | 5-Cl | $OC_2H_4C_6H_5$ | goldgelb | 405 |
| 115 | $CO_2CH_3$ | H | H | 2-$CH_3$ | 5-$CH_3$ | 2-Cl | 5-Cl | $OC_2H_4C_6H_5$ | goldgelb | 406 |
| 116 | $-CO-CH_3$ | $CH_2C_6H_5$ | H | 2-$CH_3$ | 5-$CH_3$ | 2-Cl | 5-Cl | $OCH_2C_6H_5$ | goldgelb | 405 |
| 117 | $-CO-CH_3$ | $CH_2C_6H_5$ | H | H | 5-$CH_3$ | H | H | $OCH_2C_6H_5$ | goldgelb | 405 |
| 118 | $-CO-CH_3$ | $CH_2C_6H_5$ | H | H | 5-$CH_3$ | H | H | $OC_2H_4C_6H_5$ | goldgelb | 405 |
| 119 | $-CO-CH_3$ | $CH_3$ | H | 2-$CH_3$ | 5-$OCH_3$ | 2-$CH_3$ | H | $OC_2H_4C_6H_5$ | orange | 418 |
| 120 | $-CO-CH_3$ | $CH_3$ | H | 2-$OCH_3$ | 5-$OCH_3$ | H | H | $OC_2H_4C_6H_5$ | rotorange | 485 |
| 121 | $-CO-CH_3$ | $CH_3$ | H | 2-$OCH_3$ | 5-$OCH_3$ | H | H | $OCH_2C_6H_5$ | rotorange | 485 |
| 122 | $-CO-CH_3$ | $CH_3$ | H | 2-$OCH_3$ | 5-$OCH_3$ | H | H | $OC_2H_4OC_6H_5$ | rotorange | 484 |
| 123 | $-CO-CH_3$ | $C_6H_5$ | H | 2-$OCH_3$ | 5-$OCH_3$ | H | H | $OC_6H_4$-p-Cl | rotorange | 380 |
| 124 | $-CO-CH_3$ | $C_6H_5$ | H | 2-$OCH_3$ | 5-$OCH_3$ | H | H | $OC_6H_5$ | rotorange | 380 |
| 125 | $COC_2H_5$ | $C_6H_5$ | H | 2-$OCH_3$ | 5-$OCH_3$ | H | H | $OC_6H_5$ | rotorange | 378 |
| 126 | $COC_2H_5$ | $C_6H_5$ | H | 2-$CH_3$ | 5-$CH_3$ | H | H | $OC_6H_5$ | goldgelb | 376 |
| 127 | $COCH_3$ | $C_6H_5$ | H | 2-$CH_3$ | 5-$CH_3$ | H | H | $OC_6H_5$ | goldgelb | 376 |

Fortsetzung

| Bsp. | $X^1$ | $X^2$ | $T^1$ | $T^2$ | $T^3$ | $T^4$ | $T^5$ | $T^6$ | Farbton | λ max |
|---|---|---|---|---|---|---|---|---|---|---|
| 128 | $COCH_3$ | $C_6H_5$ | H | 2-$CH_3$ | 5-$CH_3$ | H | H | $OC_6H_4$-p-Cl | goldgelb | 376 |
| 129 | $COCH_3$ | $C_6H_5$ | H | 2-$OCH_3$ | 5-$CH_3$ | H | H | $OC_6H_4$-p-Cl | orange | 378 |
| 130 | $COCH_3$ | $C_6H_5$ | H | 2-$OCH_3$ | 5-$CH_3$ | H | H | $OC_6H_5$ | orange | 378 |
| 131 | $COC_2H_5$ | $C_6H_5$ | H | 2-$OCH_3$ | 5-$CH_3$ | H | H | $OC_6H_5$ | orange | 380 |
| 132 | $COC_2H_5$ | $C_6H_5$ | H | 2-$CH_3$ | 5-$CH_3$ | H | H | $OC_6H_4$-p-Cl | goldgelb | 377 |
| 133 | CO–$CH_3$ | $C_6H_5$ | H | 2-$OCH_3$ | 5-$OCH_3$ | H | H | $OCH_2C_6H_5$ | rotorange | 380 |
| 134 | CO–$CH_3$ | $C_6H_5$ | H | 2-$OCH_3$ | 5-$OCH_3$ | H | H | $OC_2H_4C_6H_5$ | rotorange | 377 |
| 135 | –CO–$CH_3$ | $C_6H_5$ | H | 2-$CH_3$ | 5-$CH_3$ | H | H | $OC_2H_4C_6H_5$ | goldgelb | 376 |
| 136 | –CO–$CH_3$ | $C_6H_5$ | H | 2-$CH_3$ | 5-$CH_3$ | H | H | $OCH_2C_6H_5$ | goldgelb | 376 |
| 137 | –CO–$CH_3$ | $C_6H_5$ | H | 2-$OCH_3$ | 5-$CH_3$ | H | H | $OCH_2C_6H_5$ | orange | 378 |
| 138 | $COC_2H_5$ | $C_6H_5$ | H | 2-$OCH_3$ | 5-$CH_3$ | H | H | $OC_2H_4C_6H_5$ | orange | 378 |
| 139 | $COC_3H_7$ | $C_6H_5$ | H | 2-$OCH_3$ | 5-$OCH_3$ | H | H | $OC_6H_4$-p-Cl | rotorange | 380 |
| 140 | $COCH(C_2H_5)C_4H_9$(n) | $C_6H_5$ | H | 2-$OCH_3$ | 5-$OCH_3$ | H | H | $OC_6H_4$-p-Cl | rotorange | 380 |
| 141 | $COCH(C_2H_5)C_4H_9$(n) | $C_6H_5$ | H | 2-$OCH_3$ | 5-$OCH_3$ | H | H | $OC_6H_5$ | rotorange | 380 |
| 142 | CO–H | $C_6H_5$ | H | 2-$OCH_3$ | 5-$OCH_3$ | H | H | $OC_6H_4$-p-Cl | rotorange | 376 |
| 143 | $COCH_3$ | $C_6H_5$ | H | 2-$OCH_3$ | 5-$OCH_3$ | H | H | $OC_2H_4OC_6H_5$ | rotorange | 378 |

| Bsp. | Formel | Farbton | λmax |
|---|---|---|---|
| 144 | 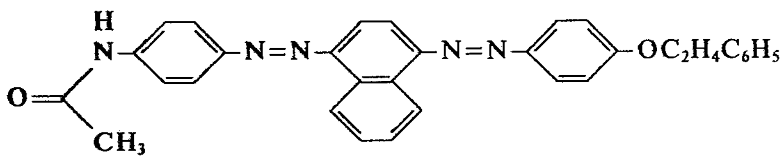 | orange | 480 |
| 145 | 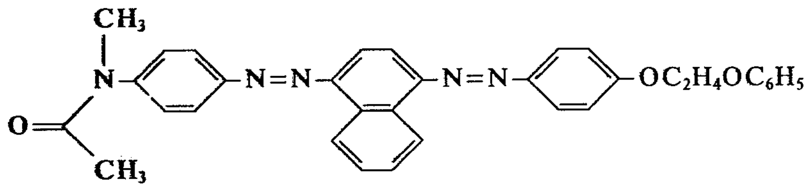 | orange | 481 |
| 146 | 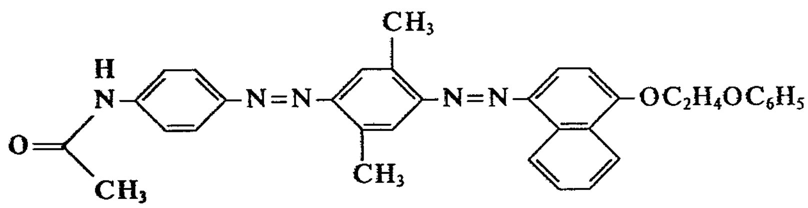 | orange | 425 |
| 147 | 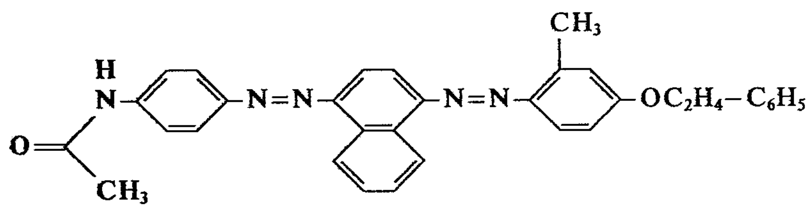 | orange | 485 |
| 148 | 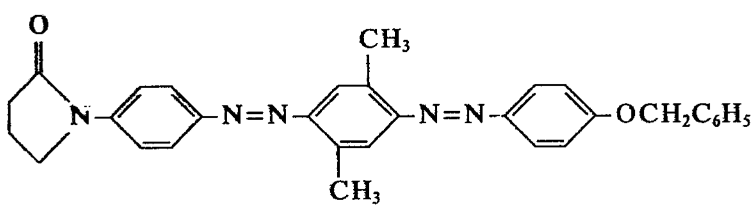 | goldgelb | 404 |
| 149 | 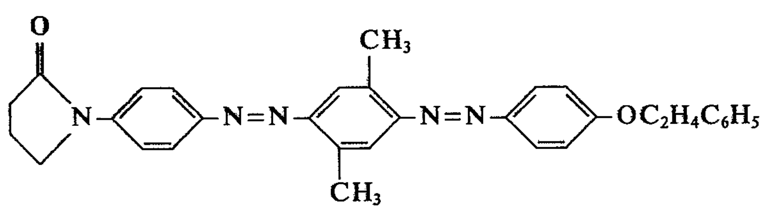 | goldgelb | 402 |
| 150 | 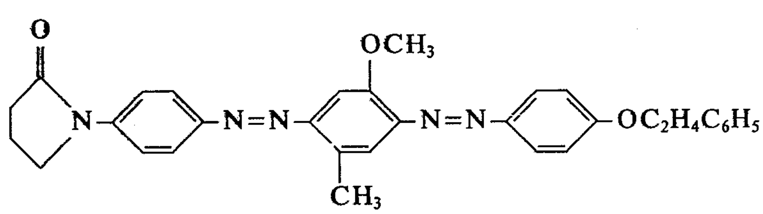 | goldgelb | 425 |
| 151 | 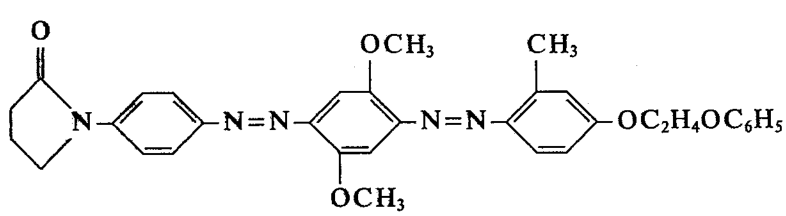 | rotorange | 485 |

**Patentansprüche**

1. Disazofarbstoffe der allgemeinen Formel I

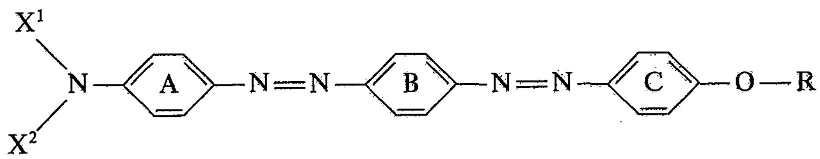

(I)

in der

R einen araliphatischen oder aromatischen Rest,

$X^1$ $-CO-R^1$, $-CO-NHR^1$, $-COOR^1$ oder

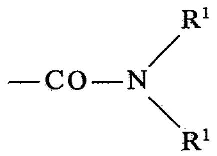

und

$X^2$ Wasserstoff, Phenyl oder einen aliphatischen oder araliphatischen Rest bedeuten, wobei

$R^1$ Wasserstoff oder ein aliphatischer, cycloaliphatischer, araliphatischer oder aromatischer Rest ist, die Ringe A, B und C noch substituiert sein und die Ringe B und C einen annellierten Benzring tragen können und wobei die Gruppe

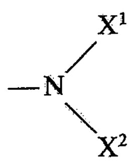

ein heterocyclischer Rest der Formel

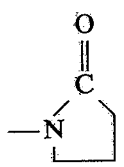

sein kann.

2. Farbstoffe gemäß Anspruch 1 der allgemeinen Formel Ia

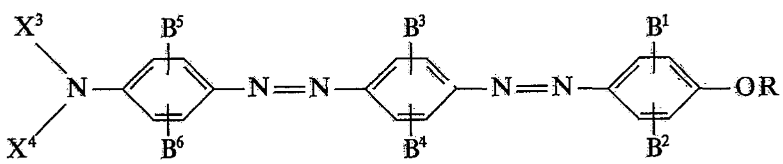

in der

| | |
|---|---|
| $B^1$ | Wasserstoff, Chlor, Methyl, Äthyl, Phenyl, Methoxy oder Äthoxy, |
| $B^2$ | Wasserstoff, Chlor oder Methyl, |
| $B^3$ | Wasserstoff, Chlor, Methyl, Äthyl, Acetylamino oder $C_1$- bis $C_4$-Alkoxy, |
| $B^4$ | Wasserstoff, Methyl oder $C_1$- bis $C_4$-Alkoxy, |
| $B^3$ und $B^4$ | zusammen einen anellierten Benzring, |
| $B^5$ | Wasserstoff, Methyl, Chlor oder $C_1$- bis $C_4$-Alkoxy, |
| $B^6$ | Wasserstoff, Methyl oder $C_1$- bis $C_4$-Alkoxy, |
| $X^3$ | $C_1$- bis $C_8$-Alkanoyl oder Benzoyl, |
| $X^4$ | Wasserstoff, $C_1$- bis $C_4$-Alkyl oder Phenyl und |
| $X^3$ und $X^4$ | zusammen einen Rest der Formel |

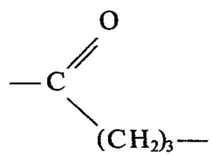

bedeuten und
R die angegebene Bedeutung hat.

3. Verwendung der Farbstoffe gemäß Anspruch 1 zum Färben und Bedrucken von Polyestern und cellulosehaltigen Fasern und Mischgeweben aus Polyestern und Cellulose.

**Claims**

1. A disazo dye of the general formula

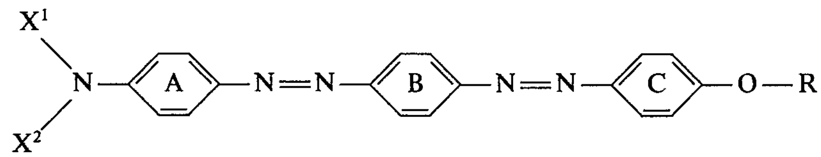

(I)

where
R is an araliphatic or aromatic radical,
$X^1$ is $-CO-R^1$, $-CO-NHR^1$, $-COOR^1$ or

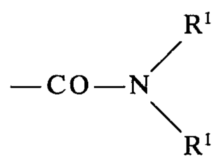

$X^2$ is hydrogen, phenyl or an aliphatic or araliphatic radical,
$R^1$ is hydrogen or an aliphatic, cycloaliphatic, araliphatic or aromatic radical, the rings A, B and C may be substituted and the rings B and C may carry a fused benzo ring, and the group

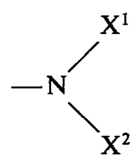

may also be a heterocyclic radical of the formula

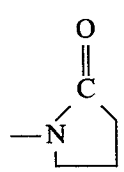

2. A dye as claimed in claim 1, of the general formula I a

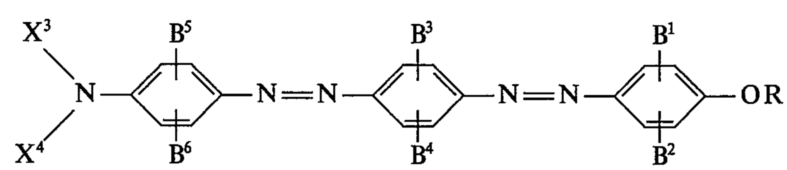

where

$B^1$ is hydrogen, chlorine, methyl, ethyl, phenyl, methoxy or ethoxy,
$B^2$ is hydrogen, chlorine or methyl,

$B^3$ is hydrogen, chlorine, methyl, ethyl, acetylamino or $C_1-C_4$-alkoxy,
$B^4$ is hydrogen, methyl or $C_1-C_4$-alkoxy,
$B^3$ and $B^4$ together may also be a fused benzo ring,
$B^5$ is hydrogen, methyl, chlorine or $C_1-C_4$-alkoxy,
$B^6$ is hydrogen, methyl or $C_1-C_4$-alkoxy,
$X^3$ is $C_1-C_8$-alkanoyl or benzoyl,
$X^4$ is hydrogen, $C_1-C_4$-alkyl or phenyl,
$X^3$ and $X^4$ together may also be a radical of the formula

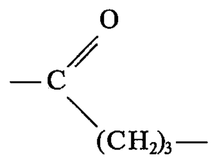

and
R has the stated meanings.

3. Use of the dyes as claimed in claim 1 for dyeing and printing polyesters and cellulose fibres and mixed fabrics of polyesters and cellulose.

## Revendications

1. Colorants diazoïques de formule générale

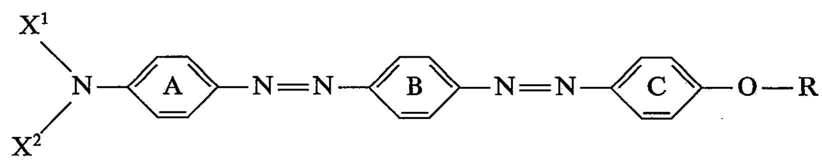
(I)

dans laquelle
R représente un radical araliphatique ou aromatique,
$X^1$ $-CO-R^1$, $-CO-NHR^1$, $-COOR^1$ ou

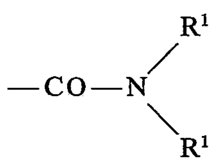

et
$X^2$ un hydrogène, un phényle ou un radical aliphatique ou araliphatique,
$R^1$ étant un hydrogène ou un radical aliphatique, cycloaliphatique, araliphatique ou aromatique, les noyaux A, B et C pouvant être encore substitués et les noyaux B et C pouvant porter un noyau condensé, et le groupe

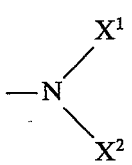

pouvant être un radical hétérocyclique de formule

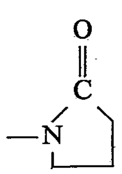

2. Colorants selon la revendication 1, de formule générale Ia

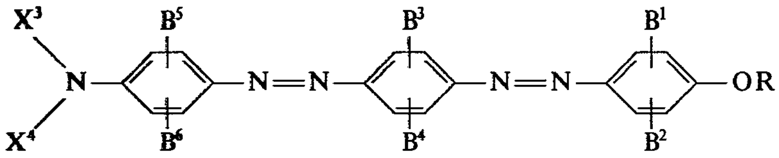

(Ia)

dans laquelle

$B^1$ représente un hydrogène, un chlore, un méthyle, un éthyle, un phényle, un méthoxy ou un éthoxy,
$B^2$ un hydrogène, un chlore ou un méthyle,
$B^3$ un hydrogène, un chlore, un méthyle, un éthyle, un acétylamino ou un alcoxy en $C_1$ à $C_4$,
$B^4$ un hydrogène, un méthyle ou un alcoxy en $C_1$ à $C_4$,
$B^3$ et $B^4$ forment ensemble un noyau benzénique condensé,
$B^5$ représente un hydrogène, un méthyle, un chlore ou un alcoxy en $C_1$ à $C_4$,
$B^6$ un hydrogène, un méthyle ou un alcoxy en $C_1$ à $C_4$,
$X^3$ un alcanoyle en $C_1$ à $C_8$ ou un benzoyle,
$X^4$ un hydrogène, un alcoyle en $C_1$ à $C_4$ ou un phényle et
$X^3$ et $X^4$ forment ensemble un radical de formule

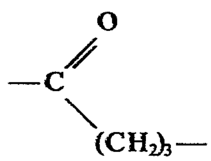

R ayant la signification donnée ci-dessus.

3. Utilisation des colorantes selon la revendication 1 pour la teinture et l'impression de polyesters et de fibres cellulosiques ou de tissus mixtes de polyesters et de cellulose.